# DEMANDE DE BREVET EUROPEEN

(11) **EP 1 776 992 A1**
(43) Date de publication de la demande: **25.04.2007**
(21) Numéro de dépôt: 06291616.8
(22) Date de dépôt: 17.10.2006
(51) Int. Cl.: B01D 35/16, F02M 37/22, F01M 11/03

(54) **Filtre à huile a vidange automatique**

(30) Priorité: 21.10.2005 FR 0510790
(71) Demandeur: FILTRAUTO, 78286 Guyancourt Cedex (FR)
(72) Inventeur: Franco, Eric, 78740 Vaux sur Seine (FR)
(74) Mandataire: Burbaud, Eric

(57) **Abrégé**

Filtre à huile, notamment pour moteur à combustion interne de véhicule automobile, ce filtre définissant une enceinte de filtration (4) dans laquelle est logé un insert filtrant (9), l'enceinte de filtration (4) étant en communication de fluide avec un conduit d'amenée d'huile à filtrer et un conduit d'évacuation (7) de l'huile filtrée, ce filtre comprenant une embase (2) et un couvercle (3) amovible sur cette embase (2), l'insert filtrant (9) définissant, dans sa position de filtration active dans l'enceinte de filtration (4) un espace interne et un espace externe, l'espace interne (11) étant en communication de fluide avec un conduit d'évacuation (7) d'huile filtrée et l'espace externe étant en communication de fluide avec un conduit d'amenée d'huile à filtrer, un canal de vidange (8) étant obturé lorsque le couvercle (3) est en position montée sur l'embase (2), ce canal de vidange (8) étant ouvert par suite de l'enlèvement du couvercle (2), caractérisé en ce que la paroi de fond (5) de l'embase (2) comprend une gorge (25) dans laquelle débouche le canal de vidange (8), le couvercle venant en partie se loger dans ladite gorge (25) et obturant ainsi le canal de vidange (8), lorsque le filtre est en position de filtration active.

## Description

La présente invention se rapporte au domaine technique des filtres à huile pour moteurs à combustion interne.

Lorsqu'un opérateur veut changer l'élément filtrant, il est souhaitable qu'il ne reçoive pas de projections d'huile.

Il est également souhaitable qu'une quantité minimale d'huile soit perdue lors du changement de l'élément filtrant.

La protection de l'environnement implique de veiller, par ailleurs, à ce que le changement de l'élément filtrant n'entraîne pas la mise au rebut d'une grande quantité de matériaux, et que les matériaux mis au rebut lors du changement de filtre soient recyclables et/ou valorisables avant mise en déchet ultime.

Les éléments filtrants sont conventionnellement des cartouches de forme annulaire, comprenant un papier filtre plissé ou matériau analogue, souvent monté sur un support cylindrique rigide. L'huile à filtrer est amenée en regard du papier plissé et passe au travers de cette paroi filtrante. L'huile filtrée aboutit dans l'espace creux défini par le support de la cartouche, ce support étant pourvu de trous à cette fin.

La cartouche est conventionnellement placée dans un carter ou boîtier comprenant une embase et un capot fixé de manière amovible sur cette embase, typiquement par vissage, des moyens assurant l'étanchéité du montage du capot sur l'embase.

On connaît dans l'art antérieur des moyens permettant la vidange du boîtier lors du changement de la cartouche filtrante.

Selon un premier type de conception, la vidange est effectuée axialement : le canal de vidange est placé, dans cette conception, dans le prolongement du conduit d'évacuation de l'huile filtrée.

L'idée d'une vidange axiale d'un filtre à huile, lors du changement de la cartouche, est en elle-même du domaine public, et illustrée par exemple dans le document GB 1 502 469, qui propose une vidange au travers d'une broche axiale fixant le couvercle à l'embase du boîtier de filtre.

Pour ce premier type de conception, on peut se reporter, par exemple, au document FR 2 834 650 de la demanderesse qui décrit un filtre à huile comprenant une embase cylindrique d'axe vertical de révolution, sur lequel est vissé un couvercle, une chambre de filtration étant ainsi définie, chambre alimentée en huile à filtrer par un conduit excentré, le canal axial de sortie de l'huile filtrée communiquant avec le canal de vidange. Un moyen élastique est placé entre le couvercle et la cartouche filtrante en papier plissé en zigzag, ou autre matériau analogue. La cartouche filtrante est pourvue d'un flasque supérieur et d'un flasque inférieur annulaires. Lorsque le couvercle est vissé sur l'embase, le moyen élastique, tel qu'un ressort spirale, exerce une contrainte axiale sur le flasque supérieur de la cartouche filtrante, en direction du fond de la cuve. Une pièce dénommée obturateur est en appui, par sa première partie annulaire supérieure, contre le flasque inférieur de la cartouche filtrante. Cet obturateur comprend une deuxième partie inférieure en forme de tige à section cruciforme, montée coulissante dans le conduit axial d'évacuation de l'huile filtrée. L'obturateur coulisse, lors du vissage/dévissage du couvercle, entre deux positions extrêmes. Une première position extrême, de fermeture, est obtenue lorsque le couvercle est en position vissée sur l'embase. L'obturateur est alors en position basse de fonctionnement du filtre et forme bouchon de fermeture pour l'orifice de liaison entre le canal d'évacuation de l'huile filtrée et le canal de vidange. La seconde position extrême de l'obturateur est obtenue lorsque le couvercle est ôté. L'obturateur, qui n'est alors plus contraint par la cartouche filtrante, est poussé en permanence par un second moyen élastique, par exemple un ressort spirale, vers sa position haute d'ouverture de l'orifice du canal de vidange. L'huile restant dans le boîtier s'écoule ainsi naturellement par le conduit d'évacuation axial, et passe par le canal de vidange. Il est à noter que l'obturateur reste à demeure dans le boîtier. En effet, lorsque l'obturateur est poussé vers le haut par les seconds moyens élastiques, l'obturateur est pourvu dans sa deuxième partie inférieure de doigts élastiques qui viennent en butée contre une collerette rigide interne s'étendant radialement dans le conduit d'évacuation axial. L'obturateur assure par ailleurs, dans sa position basse de fonctionnement du filtre, l'étanchéité entre l'entrée de l'huile à filtrer et le canal axial d'évacuation de l'huile filtrée. Il n'est ainsi pas nécessaire de prévoir un joint rapporté pour réaliser l'étanchéité radiale entre l'obturateur et l'embase, l'obturateur étant pourvu d'une collerette élastiquement déformable prenant appui sur une saillie annulaire du fond de l'embase, lorsque le couvercle est vissé sur l'embase.

Pour ce premier type de conception de vidange automatique axiale, l'on peut également se reporter au document EP 1 106 795, de la demanderesse, décrivant également un obturateur coulissant axialement entre deux positions extrêmes. Du fait que l'obturateur reste fixé dans l'embase, l'enlèvement du couvercle nécessite peu de place au dessus de l'embase. Dans une variante de réalisation, l'obturateur est clipsé sur l'insert filtrant, de sorte que le retrait de cet insert entraîne la remontée de l'obturateur jusque vers sa deuxième position extrême haute. Dans la réalisation du document FR 2 816 985, également issu de la demanderesse, l'obturateur reste fixé à l'insert filtrant lors du changement d'insert. On peut également se reporter au document EP 612 549.

Le document WO 02/11854 décrit un montage très proche de celui proposé dans le document EP 1 137 470, la broche d'évacuation n'étant toutefois pas sollicitée par un ressort pour occuper sa position d'ouverture, mais étant entraînée par coulissement, avant butée, par son encliquetage sur le support de filtre, de manière tout à fait semblable au montage divulgué par la demanderesse dans le document EP 1 106 795.

Selon un deuxième type de conception de vidange automatique de boîtier de filtre, lors du changement de cartouche filtrante, la vidange est dite décentrée, le canal de vidange n'étant pas en communication avec le conduit d'évacuation axial de l'huile filtrée.

La réalisation d'une vidange automatique lors du changement de cartouche, par une soupape non axiale maintenue en position fermée par appui de la cartouche, sous l'action d'un ressort placé entre le couvercle de filtre et la cartouche est en soi du domaine public et décrite par exemple dans le document FR 2 566 045.

De nombreux documents de brevets antérieurs décrivent des filtres à vidange décentrée. L'on peut se reporter, par exemple, aux documents EP 314 915, EP 421 080, EP 1 210 164, WO 98/32517, US 4 906 365, US 6 572 768, DE 3 933 794, DE 29 815 023 U.

L'invention se rapporte plus particulièrement à un filtre à huile pour moteur à combustion interne pourvu de moyens de vidange automatique, lors du changement d'insert, d'un type nouveau.

La demanderesse s'est attachée à fournir un filtre à huile pour moteur à combustion interne qui soit de structure plus simple, moins coûteuse que celles existantes, et qui permette une vidange rapide et propre, et ce même lorsque le filtre est fortement incliné.

A ces fins, l'invention se rapporte, selon un premier aspect, à un filtre à huile, notamment pour moteur à combustion interne de véhicule automobile, ce filtre définissant une enceinte de filtration dans laquelle est logé un insert filtrant, l'enceinte de filtration étant en communication de fluide avec un conduit d'amenée d'huile à filtrer et un conduit d'évacuation de l'huile filtrée, ce filtre comprenant une embase et un couvercle amovible sur cette embase, l'insert filtrant définissant, dans sa position de filtration active dans l'enceinte de filtration un espace interne et un espace externe, l'espace interne étant en communication de fluide avec un conduit d'évacuation d'huile filtrée et l'espace externe étant en communication de fluide avec un conduit d'amenée d'huile à filtrer, un canal de vidange étant obturé lorsque le couvercle est en position montée sur l'embase, ce canal de vidange étant ouvert par suite de l'enlèvement du couvercle, caractérisé en ce que la paroi de fond de l'embase comprend une gorge dans laquelle débouche le canal de vidange, le couvercle venant en partie se loger dans ladite gorge et obturant ainsi le canal de vidange, lorsque le filtre est en position de filtration active.

Le filtre présente, selon diverses réalisations, les caractéristiques suivantes, le cas échéant combinées :
- ladite gorge est ménagée dans la partie de fond de l'embase et est délimitée par une paroi annulaire externe et une paroi annulaire interne, un joint d'étanchéité, solidaire du couvercle, venant en appui glissant sur la paroi interne de ladite gorge lors du mouvement de retrait du couvercle ;
- le bord libre inférieur du couvercle et la partie de fond de l'embase sont en appui conique pour isoler, avec étanchéité, le canal de vidange et l'enceinte de filtration ;
- la fermeture étanche du canal de vidange, par exemple par étanchéité conique, peut être confortée par un joint rapporté sur le couvercle ou venu de matière avec le couvercle.

Dans certaines mises en oeuvre, le joint comprend au moins une lèvre en appui contre la paroi annulaire interne de la gorge.

Dans certaines mises en oeuvre, le couvercle, par exemple en matière plastique éventuellement renforcée de fibres, comprend une jupe annulaire dont la partie extrême, venant se loger dans ladite gorge, est déformable élastiquement. La déformation élastique de la partie extrême de la jupe annulaire du couvercle, lors de la mise en place du couvercle, est assurée par exemple par un amincissement de cette partie extrême.

Avantageusement, la partie extrême de la jupe annulaire du couvercle est pourvue d'un moyen d'étanchéité de type godron venant en appui contre la paroi externe de la gorge. Ce godron renforce l'étanchéité entre la gorge et la chambre de filtration et assure par ailleurs une étanchéité entre le canal de vidange et l'extérieur du filtre.

Avantageusement, la paroi de fond de l'embase comprend un trou traversant axial formant conduit d'évacuation de l'huile filtrée, une saillie s'étendant au droit de ce conduit d'évacuation, saillie contre laquelle l'insert filtrant vient en appui en position de filtration active du filtre.

Avantageusement, la paroi de fond de l'embase comprend, entre la saillie d'appui de l'insert et la gorge, une face annulaire tronconique. L'écoulement de l'huile est ainsi facilité, lors de la vidange automatique précédant le changement d'insert filtrant.

Dans certaines réalisations, le filtre comprend un ensemble pontet/by pass en appui contre l'insert filtrant, un moyen élastique étant logé entre le couvercle et cet ensemble pontet/by pass.

De manière connue en soi, dans certaines mises en oeuvre, le couvercle est vissé sur l'embase.

Un moyen d'étanchéité est logé entre le couvercle et l'embase, entre une zone d'appui d'une saillie du couvercle sur l'embase et les zones de filetage complémentaires de l'embase et du couvercle.

Avantageusement, ce moyen d'étanchéité est placé à une distance de la zone d'appui qui est inférieure à la longueur axiale de la zone des filetages complémentaires. Ainsi, le dévissage du couvercle par rapport à l'embase entraînant par ailleurs l'ouverture du canal de vidange, assure la mise en communication de l'enceinte de filtration avec l'extérieur du filtre, le moyen d'étanchéité parvenant à une hauteur supérieure à celle de la zone d'appui, laissant l'air libre d'entrer dans l'enceinte de filtration, entre les filets. La vidange automatique est obtenue sans course morte du couvercle.

Avantageusement, le bord libre inférieur du couvercle pénètre dans la gorge sur une hauteur qui est inférieure à la distance entre le moyen d'étanchéité et la zone d'appui. Ainsi, lors du dévissage du couvercle par rapport à l'embase,le canal de vidange et l'enceinte de filtration sont mis en communication un peu avant mise en communication de l'enceinte de filtration avec l'extérieur du filtre.

Le canal de vidange et le conduit d'évacuation de l'huile traitée sont disposés suivant deux directions qui peuvent être écartées entre elles entre sensiblement zéro et sensiblement quatre vingt dix degrés.

Dans certaines mises en oeuvre, le conduit d'évacuation de l'huile traitée est sensiblement axial, c'est-à-dire s'étend suivant l'axe de révolution de l'insert filtrant.

D'autres objets et avantages de l'invention apparaîtront au cours de la description suivante de modes de réalisation, description qui va être effectuée en se référant aux dessins annexés dans lesquels:
- la figure 1 est une vue schématique en coupe longitudinale d'un filtre selon un mode de réalisation de l'invention, le couvercle étant en position vissée;
- la figure 2 à 5 sont des vues schématiques en coupe longitudinale de variantes de réalisation.

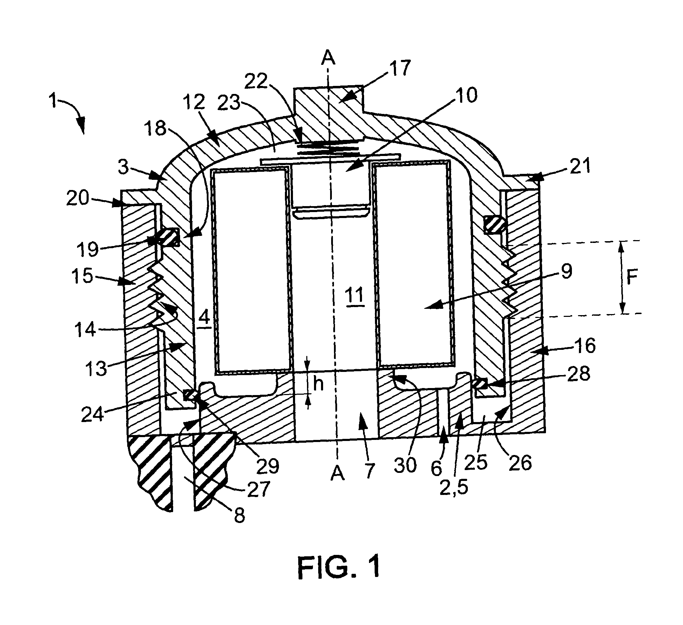

On se rapporte tout d'abord à la figure 1, qui représente un mode de réalisation de l'invention, présenté à titre d'exemple non limitatif.

Le filtre à huile 1 représenté sur cette figure comprend une embase 2 et un couvercle 3, définissant une enceinte de filtration 4.

L'embase 2 comprend une partie de fond 5 au travers de laquelle sont ménagés trois trous traversants définissant un conduit d'amenée d'huile à filtrer 6, un conduit d'évacuation 7 d'huile filtrée, et un canal de vidange 8 pour l'écoulement de l'huile restant dans l'enceinte de filtration 4 lors du changement de l'insert filtrant 9.

Dans le mode de réalisation représenté en figure 1, les trous traversants définissant les conduits 6, 7 et le canal de vidange 8 sont sensiblement parallèles, le conduit d'évacuation 7 de l'huile filtrée étant axial.

Le terme « axial » est ici employé en référence aux symétries de révolution que présente, autour de cet axe AA :
- l'insert filtrant 9, par exemple formé de papier plié en zigzag ;
- l'ensemble pontet/clapet by pass 10 en appui sur la partie supérieure de l'insert filtrant 9 et s'étendant dans l'espace interne axial 11 formé par cet insert filtrant 9 ;
- le couvercle 3 qui comprend une partie supérieure bombée 12 prolongée par une jupe annulaire 13 pourvue d'un filetage externe 14 complémentaire d'un filetage interne 15 de la jupe annulaire 16 de l'embase 2.

Le couvercle peut comprendre une rallonge tubulaire, par exemple vissée, en partie inférieure.

Le couvercle 3 comprend, de manière connue en soi, en saillie externe, une forme 17 par exemple hexagonale, facilitant le vissage/dévissage de ce couvercle 3 sur l'embase 2.

Le couvercle 3 est pourvu, sur sa jupe annulaire 13, d'une gorge externe 18 logeant un joint d'étanchéité 19. Lorsque le couvercle 3 est en position vissée sur l'embase 2, cette gorge externe 18 logeant le joint 19 est placée à une hauteur comprise entre la zone de filetage F des couvercle et embase et l'appui annulaire 20 d'une saillie 21 du couvercle 3 contre le bord supérieur de la jupe 16 de l'embase 2. Avantageusement, l'huile restant dans le filtre 1 s'écoule dans le canal de vidange 8 avant que le couvercle 3 ne puisse être complètement ôté de l'embase 2 par l'opérateur. Ceci permet de limiter les risques de projection d'huile sur l'opérateur, lors du changement de l'insert filtrant 9. Cette caractéristique avantageuse est obtenue par la mise en oeuvre de plusieurs mesures. En particulier, dans le mode de réalisation de la figure 1, le joint d'étanchéité 19 est placé à une distance de l'appui annulaire 20 qui est inférieure à la longueur axiale de la zone des filetages complémentaires 14,15. Ainsi, lorsque le couvercle 3 est dévissé de l'embase 2, le joint 19 parvient à une hauteur supérieure à celle de l'appui annulaire 20, laissant l'air libre d'entrer dans l'enceinte de filtration 4, entre les filets 14,15. Dans le même temps, ainsi qu'il apparaîtra par la suite, le canal de vidange 8 est ouvert.

La position de fermeture du couvercle 3 sur l'embase est par ailleurs parfaitement déterminée.

Un moyen élastique 22, tel que par exemple un ressort spirale, est placé dans l'espace 23 délimité par le couvercle 3 et l'ensemble pontet/by pass 10.

Lorsque le couvercle 3 est en position fermée, illustrée en figure 1, l'ensemble pontet/by pass 10 exerce ainsi une contrainte sur l'insert filtrant 9, qui lui-même est en appui sur la paroi de fond 5 de l'embase 2.

Dans une réalisation avantageuse, le couvercle 3, l'embase 2 sont en matière plastique ou composite.

Lorsque le couvercle 3 est en position vissée, son bord libre inférieur 24 est logé dans une gorge annulaire 25 de révolution autour de l'axe AA.

Cette gorge annulaire 25 est ménagée dans la paroi de fond 5 de l'embase 2.

Cette gorge 25 est délimitée, vers l'extérieur, par la face interne 26 de la jupe annulaire 16 de l'embase 2 et, vers l'intérieur, par une paroi annulaire 27 d'axe de révolution AA.

Le canal de vidange débouche dans la gorge 25.

La jupe annulaire 13 du couvercle 3 est pourvue, sur sa face interne, d'une gorge annulaire 28 dans laquelle est placé un joint d'étanchéité 29. Lorsque le couvercle 3 est vissé, ce joint 29 vient en appui contre la paroi 27 délimitant la gorge 25, permettant d'isoler la chambre de filtration 4 de la gorge 25 et par conséquent d'isoler la chambre de filtration du canal de vidange 8. Lors du dévissage du couvercle 3, ce joint 29 est en appui glissant sur cette paroi 27.

Lorsque l'opérateur commence à dévisser le couvercle 3 par rapport à l'embase 2, l'ouverture du canal de vidange est ainsi libérée et l'huile qui restait dans le filtre s'écoule automatiquement par ce canal 8, avant que le couvercle ne soit complètement ôté de l'embase 2. Il est à noter que la vidange de l'huile est obtenue indépendamment des caractéristiques du moyen élastique 22 ou de l'insert filtrant 9. La vidange est assurée au cours du dévissage du couvercle 3, sans course morte. Le nombre de tours nécessaire pour obtenir la vidange est ainsi réduit, par rapport aux dispositifs de vidange conventionnels.

La profondeur de la gorge 25 permet d'assurer une vidange propre, par exemple lorsque le filtre est en position inclinée.

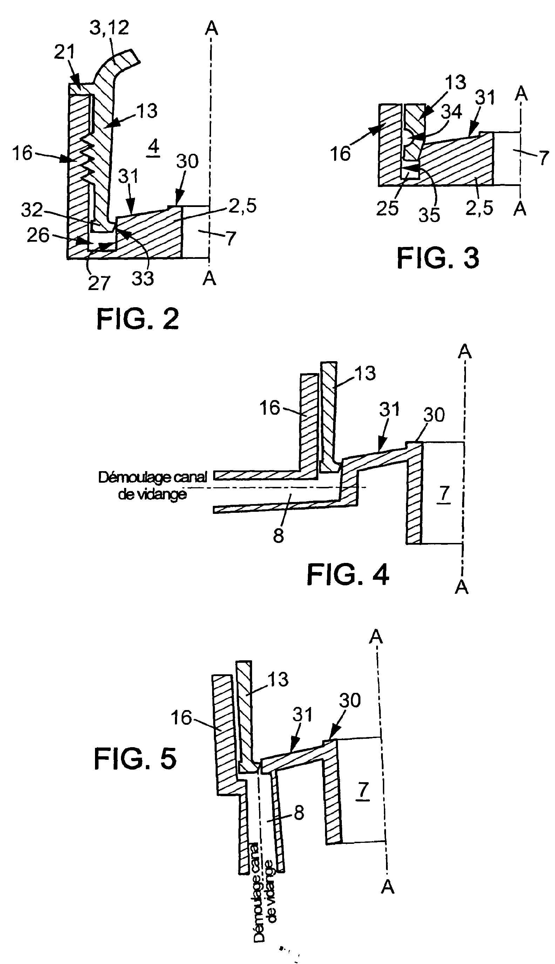

L'on se reporte maintenant à la figure 2. Sur cette figure 2, afin de simplification, l'élément filtrant 9 n'est pas représenté, et seule une partie gauche du filtre 1 est dessinée en coupe longitudinale, compte tenu de la symétrie par rapport à l'axe AA mentionnée auparavant.

Dans la réalisation représentée sur cette figure 2, tout comme dans le mode de réalisation de la figure 1, l'insert filtrant 9 est en appui contre une saillie annulaire 30 de la paroi de fond 5 de l'embase 2, cette zone d'appui 30 étant placée au droit de l'ouverture du conduit axial 7 d'évacuation de l'huile filtrée. Cette saillie 30 présente toutefois une hauteur plus faible que celle h, de la saillie référencée 30 du mode de réalisation de la figure 1.

Dans le même temps, dans le mode de réalisation de la figure 2, la paroi de fond 5 de l'embase 2 comprend, entre la zone d'appui 30 et la gorge périphérique 25, une face annulaire tronconique 31. Ces dispositions favorisent la vidange de l'huile restant dans la cuve du filtre, sans zone morte, lors du retrait du couvercle 3.

En lieu et place du joint d'étanchéité référencé 29 du mode de réalisation représenté en figure 1, un joint d'étanchéité 32 est disposé, dans le mode de réalisation de la figure 2, contre le bord libre inférieur de la jupe annulaire 13 du couvercle 3. Ce joint est par exemple encliqueté sur le couvercle ou bien encore coextrudé avec le couvercle 3. Ce joint 32 comprend au moins une lèvre 33 venant en appui glissant contre la face 27 délimitant la gorge 25, isolant l'enceinte de filtration 4 de la gorge 25 et du canal de vidange 8.

Dans le mode de réalisation de la figure 2, le joint d'étanchéité référencé 19 en figure 1 peut être omis, ce qui permet de réduire la hauteur du filtre.

L'on se reporte maintenant à la figure 3 qui est une vue de détail d'une réalisation de la partie extrême libre du couvercle 3. La paroi de fond 5 de l'embase 2, représentée en figure 3 est analogue à celle décrite ci-dessus en référence à la figure 2. Le bord libre du couvercle est pourvu, en combinaison, d'un amincissement 34, par exemple sous forme d'une gorge ménagée sur sa face externe.

L'amincissement 34 facilite la déformation élastique de la partie extrême inférieure de la jupe 13 du couvercle 3, lors de son coulissement dans la gorge 25. Dans cette réalisation particulière, l'étanchéité entre le couvercle et la gorge 25 est assurée par un contact conique entre ce couvercle 3 et la paroi de fond 5 de l'embase 2.

Dans une variante de réalisation, illustrée en figure 3, le bord libre du couvercle 3 est pourvu d'un godron 35, permettant de renforcer l'étanchéité entre la gorge 25 et la chambre de filtration 4. Ce godron 35 assure par ailleurs une étanchéité entre le canal de vidange 8 et l'extérieur du filtre 1, le joint 19 décrit en référence au mode de réalisation de la figure 1 pouvant ainsi être omis, le cas échéant.

L'on se reporte maintenant aux figures 4 et 5. Dans les réalisations représentées sur ces figures 4 et 5, les éléments décrits en référence à la figure 2 sont repris. Ces figures 4 et 5 schématisent un des nombreux avantages des filtres selon la présente invention: il est possible de placer le canal de vidange 8 de manière axiale (comme indiqué en figure 5) ou de manière radiale (comme indiqué en figure 4) ou suivant un angle quelconque entre ces deux positions axiale et radiale. Lorsque l'embase est venue de fonderie, le démoulage du canal de vidange 8 est obtenu en sens inverse de celui du reste de cette embase ou cuve.

### Terminologie employée

- 1: filtre à huile
- 2: embase
- 3: couvercle
- 4: enceinte de filtration
- 5: partie de fond de l'embase 2
- 6: conduit d'amenée de l'huile à filtrer
- 7: conduit d'évacuation de l'huile filtrée
- 8: canal de vidange
- 9: insert filtrant
- 10: ensemble pontet/clapet by pass
- 11: espace interne axial formé par l'insert filtrant 9
- 12: partie supérieure bombée du couvercle 3
- 13: jupe annulaire du couvercle 3
- 14: filetage externe de la jupe annulaire 13
- 15: filetage interne de la jupe annulaire 16
- 16: jupe annulaire de l'embase 2
- 17: forme en saillie sur le couvercle 3
- 18: gorge externe sur jupe annulaire 13
- 19: joint d'étanchéité logé dans la gorge 18
- 20: appui annulaire du couvercle 3 contre l'embase 2
- 21: saillie annulaire du couvercle
- 22: moyen élastique placé dans l'espace 23
- 23: espace délimité par le couvercle 3 et l'ensemble pontet/clapet by pass 10
- 24: bord libre inférieur du couvercle 3
- 25: gorge annulaire ménagée dans la paroi de fond 5
- 26: face interne de la jupe annulaire 16
- 27: paroi annulaire interne de la gorge 25
- 28: gorge annulaire de la jupe 13
- 29: joint d'étanchéité logé dans la gorge 28
- 30: saillie annulaire de la partie de fond 5
- 31: face annulaire tronconique de la partie de fond 5
- 32: joint d'étanchéité
- 33: lèvre du joint 32
- 34: amincissement de la jupe 13
- 35: godron

## Revendications

1. Filtre à huile, notamment pour moteur à combustion interne de véhicule automobile, ce filtre définissant une enceinte de filtration (4) dans laquelle est logé un insert filtrant (9), l'enceinte de filtration (4) étant en communication de fluide avec un conduit d'amenée (6) d'huile à filtrer et un conduit d'évacuation (7) de l'huile filtrée, ce filtre comprenant une embase (2) et un couvercle (3) amovible sur cette embase (2), l'insert filtrant (9) définissant, dans sa position de filtration active dans l'enceinte de filtration (4) un espace interne et un espace externe, l'espace interne (11) étant en communication de fluide avec un conduit d'évacuation (7) d'huile filtrée et l'espace externe étant en communication de fluide avec un conduit d'amenée (6) d'huile à filtrer, un canal de vidange (8) étant obturé lorsque le couvercle (3) est en position montée sur l'embase (2), ce canal de vidange (8) étant ouvert par suite de l'enlèvement du couvercle (2), **caractérisé en ce que** la paroi de fond (5) de l'embase (2) comprend une gorge (25) dans laquelle débouche le canal de vidange (8), le couvercle (3) venant en partie se loger dans ladite gorge (25) et obturant ainsi le canal de vidange (8), lorsque le filtre (1) est en position de filtration active.

2. Filtre selon la revendication 1, **caractérisé en ce que** ladite gorge (25) est délimitée par une paroi annulaire externe (26) et une paroi annulaire interne (27), un joint d'étanchéité (29,32) solidaire du couvercle (3), venant en appui glissant sur la paroi interne (27) de ladite gorge (25) lors du mouvement de retrait du couvercle (3).

3. Filtre selon la revendication 1 ou 2, **caractérisé en ce que** le bord libre inférieur du couvercle (3) et la partie de fond (5) de l'embase sont en appui conique pour isoler, avec étanchéité, le canal de vidange (8) et la chambre de filtration.

4. Filtre selon l'une quelconque des revendications 2 ou 3, **caractérisé en ce que** le joint est rapporté sur le couvercle (3) ou venu de matière avec le couvercle (3).

5. Filtre selon l'une quelconque des revendications 2 à 4, **caractérisé en ce que** le joint (32) comprend au moins une lèvre (33) en appui contre la paroi annulaire interne (27) de la gorge (25).

6. Filtre selon l'une quelconque des revendications 1 à 5, **caractérisé en ce que** le couvercle (3) comprend une jupe annulaire (16) dont la partie extrême, venant se loger dans ladite gorge (25), est déformable élastiquement.

7. Filtre selon la revendication 6, **caractérisé en ce que** la déformation élastique de la partie extrême de la jupe annulaire (16) du couvercle (3), lors de la mise en place du couvercle (.3), est assurée par un amincissement (34) de cette partie extrême.

8. Filtre selon la revendication 6 ou 7, **caractérisé en ce que** la partie extrême de la jupe annulaire du couvercle (3) est pourvue d'un moyen d'étanchéité de type godron (35) venant en appui contre la paroi externe (26) de la gorge (25), ce godron (35) renforçant l'étanchéité entre la gorge (25) et la chambre de filtration (4) et assurant par ailleurs une étanchéité entre le canal de vidange (8) et l'extérieur du filtre (1).

9. Filtre selon l'une quelconque des revendications précédentes, **caractérisé en ce que** la paroi de fond (5) de l'embase (2) comprend un trou traversant axial formant conduit d'évacuation (7) de l'huile filtrée, une saillie (31) s'étendant au droit de ce conduit d'évacuation (7), saillie contre laquelle l'insert filtrant (9) vient en appui en position de filtration active du filtre (1).

10. Filtre selon la revendication 9, **caractérisé en ce que** la paroi de fond (5) de l'embase comprend, entre la saillie (31) d'appui de l'insert (7) et la gorge (25), une face annulaire tronconique (31).

11. Filtre selon l'une quelconque des revendications précédentes, **caractérisé en ce qu'**il comprend un ensemble pontet/by pass (10) en appui contre l'insert filtrant (9), un moyen élastique (22) étant logé entre le couvercle (3) et cet ensemble pontet/by pass (10).

12. Filtre selon l'une quelconque des revendications précédentes, **caractérisé en ce que** le couvercle (3) est vissé sur l'embase (2).

13. Filtre selon la revendication 12, **caractérisé en ce qu'**un moyen d'étanchéité (19) est logé entre le couvercle (3) et l'embase (2), entre une zone d'appui (20) d'une saillie (21) du couvercle (3) sur l'embase (2) et les zones de filetage complémentaires (14,15) de l'embase (2) et du couvercle (3).

14. Filtre selon la revendication 13, **caractérisé en ce que** le moyen d'étanchéité (19) est placé à une distance de la zone d'appui (20) qui est inférieure à la longueur axiale de la zone des filetages complémentaires (14, 15), de sorte que le dévissage du couvercle (3) par rapport à l'embase (2) entraîne d'une part l'ouverture du canal de vidange (8) et d'autre part la mise en communication de l'enceinte de filtration (4) avec l'extérieur du filtre, le moyen d'étanchéité (19) parvenant à une hauteur supérieure à celle de la zone d'appui (20), laissant l'air libre d'entrer dans l'enceinte de filtration (4), entre les filets (14,15).

15. Filtre selon la revendication 14, **caractérisé en ce que** le bord libre inférieur du couvercle pénètre dans la gorge (25) sur une hauteur qui est inférieure à la distance entre le moyen d'étanchéité (19) et la zone d'appui (20), de sorte que, lors du dévissage du couvercle (3) par rapport à l'embase (2),le canal de vidange (8) et l'enceinte de filtration (4) sont mis en communication un peu avant mise en communication de l'enceinte de filtration avec l'extérieur du filtre (1).

16. Filtre selon l'une quelconque des revendications précédentes, **caractérisé en ce que** le canal de vidange (8) et le conduit d'évacuation (7) de l'huile traitée sont disposés suivant deux directions écartées entre elles entre sensiblement zéro et sensiblement quatre vingt dix degrés.

17. Filtre selon la revendication 16, **caractérisé en ce que** le conduit d'évacuation (7) de l'huile traité est sensiblement axial, c'est-à-dire s'étend suivant l'axe de révolution de l'insert filtrant (9).
